# EUROPEAN PATENT APPLICATION

(11) **EP 2 615 845 A2**
(43) Date of publication of application: **17.07.2013**
(21) Application number: 12197560.1
(22) Date of filing: 17.12.2012
(51) Int. Cl.: H04N 21/418

(54) **Image processing apparatus and control method thereof**

(30) Priority: 16.01.2012 KR 20120004581
(71) Applicant: Samsung Electronics Co., Ltd., Gyeonggi-do 443-742 (KR)
(72) Inventor: Kim, In-hwan, Gyeonggi-do (KR); Kim, Soo-hyang, Gyeonggi-do (KR)
(74) Representative: Brandon, Paul Laurence

(57) **Abstract**

An image processing apparatus and a control method thereof are provided. The image processing apparatus includes: an interface which is connectable to a plurality of Common Interface Conditional Access Modules (CICAMs) which descrambles a scrambled broadcasting signal; a storage unit which stores a plurality of operator profiles corresponding to the plurality of CICAMs; and a controller which, if a CICAM from among the plurality of CICAMS is connected to the interface, obtains identification information from the CICAM connected to the interface, selects an operator profile corresponding to the obtained identification information among the plurality of operator profiles, generates a list of channels capable of being descrambled by receiving additional information about the channels capable of being descrambled from the connected CICAM via the selected operator profile.

## Description

### CROSS-REFERENCE TO RELATED APPLICATION

This application claims priority from Korean Patent Application No. 10-2012-0004581, filed on January 16, 2012 in the Korean Intellectual Property Office, the disclosure of which is incorporated herein by reference.

### BACKGROUND

### 1. Field

Apparatuses and methods consistent with the exemplary embodiments relate to an image processing apparatus and a control method thereof, and more particularly, to an image processing apparatus and a control method thereof which enables a user to view a paid broadcasting channel through at least one common interface conditional access system.

### 2. Description of the Related Art

With rapid transition of broadcasting media into digital formats, digital broadcasting has been widespread. Examples of such digital broadcasting include digital terrestrial broadcasting, digital satellite broadcasting and digital cable broadcasting. The digital broadcasting is largely divided into free channel broadcasting and paid channel broadcasting. The paid channel broadcasting descrambles the broadcasting by Conditional Access System (CAS) or Common Interface (Cl).

The CAS runs on set-top boxes and encrypts particular paid channel broadcasting so that a viewer can view a program only after paying predetermined fee for the program. The Cl additionally has a Conditional Access Module (CAM) as a card in which the CAS is installed to view a paid channel broadcasting. In the case of the Cl, the CAM is inserted to a Personal Computer Memory Card International Association (PCMCIA) slot to access the Cl module through a subscriber authentication process. Then, a scrambled transport stream (TS) is transmitted through the Cl and descrambled by the CAM.

A television (TV) which adopts the Cl may use a plurality of CAMs provided by a plurality of cable broadcasters. A related art TV has a channel list in which free broadcasting and paid broadcasting provided by the plurality of cable broadcasters are mixed so that a user should suffer inconvenience in selecting each channel list corresponding to the CAS currently connected to the TV.

### SUMMARY

According to an aspect of an exemplary embodiment, there is provided an image processing apparatus including: an interface which is connectable to a plurality of Common Interface Conditional Access Modules (CICAMs) which descrambles a scrambled broadcasting signal; a storage unit which stores a plurality of operator profiles corresponding to the plurality of CICAMs; and a controller which, if a CICAM from among the plurality of CICAMS is connected to the interface, obtains identification information from the CICAM connected to the interface, selects an operator profile corresponding to the obtained identification information among the plurality of operator profiles, generates a list of channels capable of being descrambled by receiving additional information about the channels capable of being descrambled from the connected CICAM via the selected operator profile.

The storage unit may further store operator profile information comprising identification information about the connected CICAM and identification information about the operator profile.

The additional information about the channels capable of being descrambled may include network information table (NIT) information provided by the connected CICAM.

The image processing apparatus may further include a display unit which displays the generated list of channels capable of being descrambled.

The image processing apparatus further include an on screen display (OSD) generator, wherein the controller controls the OSD generator to display a type of the operator profile selected.

The controller may control the storage unit to receive and store a corresponding operator profile from the connected CICAM if there is no operator profile corresponding to the identification information among the plurality of stored operator profiles.

The image processing apparatus may further include: a receiver which receives a broadcasting signal comprising channel information; and a signal processor which transmits the broadcasting signal to the display unit.

The controller may extract additional information about a channel from the broadcasting signal received by the receiver and generate a channel list from the extracted additional information if no CICAM has been connected to the interface.

According to an aspect of another exemplary embodiment there is provided a control method of an image processing apparatus including: storing a plurality of operator profiles corresponding to a plurality of Common Interface Conditional Access Modules (CICAMs); connecting a CICAM from among the plurality of CICAMs; obtaining identification information from the connected CICAM and selecting an operator profile corresponding to the obtained identification information from among the plurality of stored operator profiles; receiving additional information of a channel capable of being descrambled from the connected CICAM by using the selected operator profile; and generating a list of channels capable of being descrambled based on the received additional information.

The control method may further include storing information about the operator profile comprising identification information about the connected CICAM and identification information about the operator profile.

The additional information of the channel capable of being descrambled may include network information table (NIT) information which is provided by the connected CICAM.

The control method may further include displaying the generated channel list.

The control method may further include displaying a type of the selected operator profile.

The control method may further comprise receiving a corresponding operator profile from the connected CICAM if no operator profile corresponds to the identification information from among the plurality of stored operator profiles.

The control method further include: receiving a broadcasting signal comprising channel information; and processing the received broadcasting signal.

The control method may further include: extracting additional information about a channel from the received broadcasting signal if no CICAM is connected; and generating a channel list from the extracted additional information.

The OSD generator may display a pop-up window which includes the type of the operator profile selected.

The displaying may include displaying the type of the operator profile selected in a pop-up window.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram of an image processing system according to an exemplary embodiment;
FIG. 2 is a control block diagram of an image processing system, an example of which is shown in FIG. 1;
FIG. 3 illustrates an example of a pop up window which is displayed in an image processing apparatus, an example of which is shown in FIG. 2;
FIG. 4 illustrates another example of the pop up window which is displayed in an image processing apparatus, an example of which is shown in FIG. 2; and
FIGS. 5 and 6 are control flowcharts of an image processing apparatus, an example of which is shown in FIG. 2.

### DETAILED DESCRIPTION OF EXEMPLARY EMBODIMENTS

Below, exemplary embodiments will be described in detail with reference to accompanying drawings. The exemplary embodiments may be embodied in various forms without being limited to the exemplary embodiments set forth herein. Descriptions of well-known parts are omitted for clarity, and like reference numerals refer to like elements throughout.

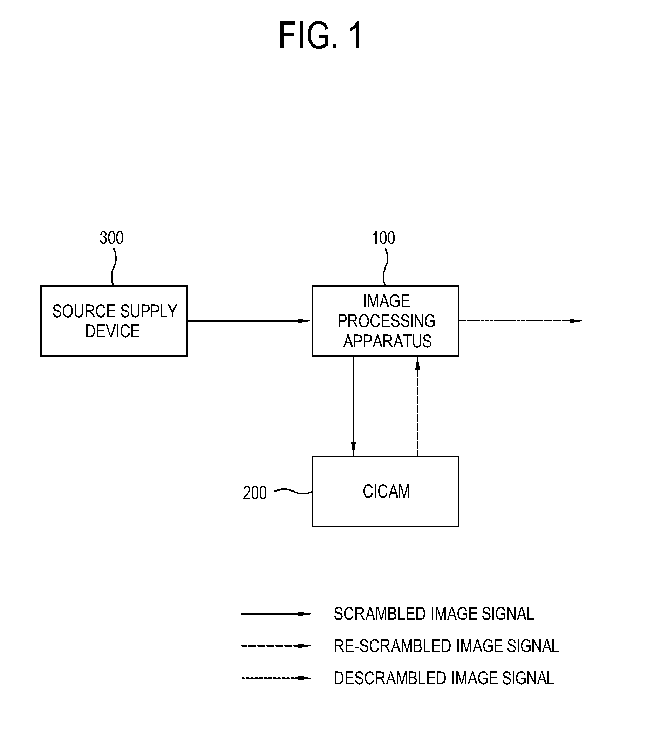

FIG. 1 is a block diagram of an image processing system according to an exemplary embodiment.

As shown therein, an image processing system 1 includes an image processing apparatus 100. A Common Interface Conditional Access Module (CICAM) 200 and a source supply device 300.

The source supply device 300 supplies an image signal, e.g., a paid broadcasting signal, to the image processing apparatus 100. The source supply device 300 supplies a scrambled image signal to the image processing apparatus 100.

If the CICAM 200 is connected through an interface 140 of the image processing apparatus 100, the image processing apparatus 100 transmits to the CICAM 200 the scrambled image signal that is supplied by the source supply device 300.

The CICAM descrambles the supplied image signal scrambled, and re-scrambles the descrambled image signal to transmit the re-scrambled image signal to the image processing apparatus 100.

The image processing apparatus 100 descrambles the re-scrambled image signal that has been transmitted by the CICAM 200 to display a broadcasting signal.

The CICAM 200 reconverts and transmits the scrambled image signal corresponding to a paid broadcasting channel that has been subscribed for by a user, so that the image processing apparatus 100 processes the image signal.

If the CICAM 200 is connected to the interface 140 of the image processing apparatus 100, the CICAM 200 transmits a corresponding operator profile to the image processing apparatus, and the image processing apparatus 100 stores the operator profile therein. The operator profile controls the paid broadcasting channel and provides other information in compliance with broadcasting channel policies of an operator which provides the corresponding CICAM 200.

A plurality of CICAMs 200 may be connected through the interface 140 of the image processing apparatus 100. That is, if a user has subscribed for different paid broadcasting channels of a plurality of operators providing the paid broadcasting channels, he/she may obtain the corresponding CICAM 200 from the plurality of operators. In this case, the plurality of CICAM 200 may be connected to the interface 140 of the image processing apparatus 100. Accordingly, the image processing apparatus 100 processes paid broadcasting channels depending on the type of the CICAM 200 connected to the interface 140. As described above, even if the CICAM 200 is connected to the interface 140, the image processing apparatus 100 may receive an image signal from the CICAM 200 in the case that it includes the operator profile corresponding to the CICAM 200 connected thereto.

However, if a plurality of operator profiles is stored in the image processing apparatus 100, a user should select an operator profile corresponding to the CICAM connected to the interface 140 in the case of a related art image processing apparatus. This causes inconvenience for a user. That is, if the related art image processing apparatus stores therein a plurality of operator profiles OP1, OP2,... and OP N corresponding to a plurality of CICAMs CICAM 1, CICAM2,... and CICAM N and the CICAM 2 is connected to the interface, a user should select the OP2 corresponding to the CICAM 2 among the plurality of operator profiles as stored. As a user does not remember each of operator profiles according to the type of the CICAM and should continue to select the operator profile until he/she finds the matching operator profile.

Accordingly, in the image processing apparatus 100, a plurality of operator profiles are already stored therein and upon selection of any CICAM, the operator profile corresponding to the connected CICAM is automatically selected and the signal provided by the CICAM through the selected operator profile is processed to enhance a user's convenience.

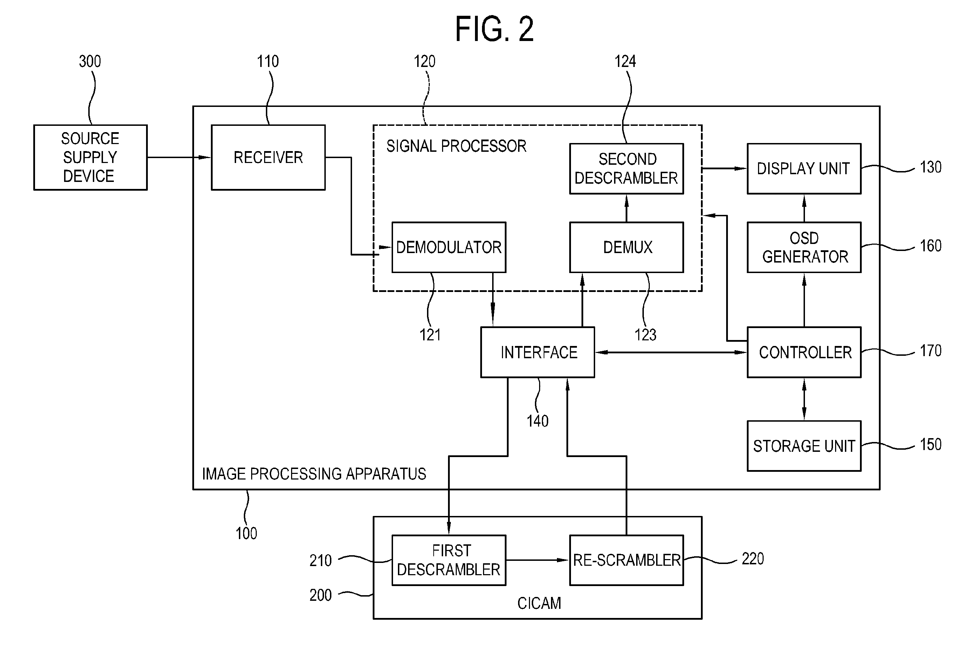

FIG. 2 is a control block diagram of an image processing system, an example of which is the image processing system 100 shown in FIG. 1.

As shown therein, the image processing apparatus 100 includes a receiver 110, a signal processor 120, a display unit 130, an interface 140, a storage unit 150, an on screen display (OSD) generator 160 and a controller 170 which controls the foregoing elements.

The CICAM 200 includes a first descrambler 210 and a re-scrambler 220.

The image processing apparatus 100 is an electronic device receiving an image signal from the outside, in particular a digital image signal. For example, the image processing apparatus 100 may include a digital TV (DTV), an internet protocol TV (IPTV), smart TV, set-top box, etc. The smart TV includes an open software platform and provides a user with interactive service. The smart TV displays broadcasting signals in real-time and concurrently enables a user to search and consume various contents through the Internet and provides a convenient user environment.

The receiver 110 receives a digital broadcasting signal from the outside, and outputs the received broadcasting signal in sync with a selected reception band. The receiver 110 may include an antenna to receive a digital broadcasting signal and a tuner to tune a desired channel. The digital broadcasting signal includes a broadcasting signal according to the High Definition Multimedia Interface (HDMI) standard.

Otherwise, the receiver 110 may receive an analog/digital broadcasting signal from a broadcasting station in wireless/wired manner, i.e., by airwave or cable.

The receiver 110 may vary depending on the standard of a broadcasting signal and a type of the image processing apparatus 100. In the case of an analog broadcasting signal, the receiver 110 may wirelessly receive a broadcasting signal which is provided as a radio frequency (RF) signal by airwave, or receive in wired manner a broadcasting signal which is provided as a composite/component video signal by cable.

The signal processor 120 processes a received image signal to display the image signal on the display unit 130. The signal processor 120 may include a demodulator 121 to demodulate a received image signal, a demultiplexer (demux) 123 to divide an image signal into an audio/video signal and a data signal, and a second descrambler 124 to descramble an image signal that has been re-scrambled by the CICAM 200.

In addition, the signal processor 120 may further include a decoder (not shown) to decode the audio/video signal that has been divided by the demux 123, and a scaler (not shown) to scale the video signal according to an output standard of the display unit 130.

The display unit 130 displays an image thereon corresponding to an image signal output by the signal processor 120. The display unit 130 includes a display panel (not shown) to display the image thereon and a panel driver (not shown) to drive the display panel. The display unit 130 may include liquid crystal, plasma, light emitting diode, organic light-emitting diode, surface-conduction electron-emitter, carbon nano-tube, and nano crystal, but not limited thereto.

The interface 140 may be connected to (or have access to, or be inserted into) any of the plurality of CICAMs which descrambles a scrambled image signal. The interface 140 may include a common interface slot, which may include a PCMCIA slot.

If the receiver 110 receives a scrambled image signal, such scrambled image signal is transmitted to the CICAM 200 connected to the interface 140 by a control of the controller 170.

The CICAM 200 which is connectable to the interface 140 may include a first descrambler 210 and a re-scrambler 220.

The CICAM 200 may include a smart card as a module separately from the image processing apparatus 100. The first descrambler 210 includes a CAS and descrambles a scrambled image signal or scrambled transport stream (TS) which is received through the interface 140.

The re-scrambler 220 re-scrambles the TS that is descrambled by the first descrambler 210. Contents may be protected by the re-scrambling function in the course of communication between the CICAM 200 and the image processing apparatus 100. The re-scrambled TS is protected from being illegally copied.

The CICAM 200 transmits the image signal that is re-scrambled by the re-scrambler 220 to the demux 123 through the interface 140. The demux 123 transmits the re-scrambled image signal to the second descrambler 124. The second descrambler 124 descrambles the re-scrambled image signal to process the image signal by the image processing apparatus 100.

The storage unit 150 stores therein a plurality of operator profiles corresponding to the plurality of CICAM 200. The operator profile adjusts a paid broadcasting channel and provides other information according to broadcasting channel policies of an operator that provides the CICAM 200. As described above, if a plurality of CICAM (e.g., CICAM 1, CICAM 2, .... and CICAM N) is connectable to the interface 140, a plurality of operator profiles (OP 1, OP 2, .... and OP N) is stored in the storage unit 150 corresponding to the plurality of CICAM by a control of the controller 170 upon connection of the plurality of CICAM to the interface 140.

The storage unit 150 further stores therein information of the plurality of stored operator profiles. The information includes identification information of each operator profile and identification information of the CICAM corresponding to each operator profile.

The OSD generator 160 generates a popup window displaying a type of the selected operator profile based on the identification information of the CICAM 200 and displays the popup window on the display unit 130 by a control of the controller 170.

The controller 170 obtains the identification information from the CICAM 200 connected to the interface 140, selects an operator profile corresponding to the obtained identification information among the plurality of operator profiles, receives additional information of channels capable of being descrambled from the connected CICAM 200 by using the selected operator profile and generates a list of channels capable of being descrambled.

Upon insertion of the CICAM 200 into the interface 140, the controller 170 may control the OSD generator 160 to generate a popup window to notify a user of the insertion of the CICAM 200 and control the display unit 130 to display the popup window thereon.

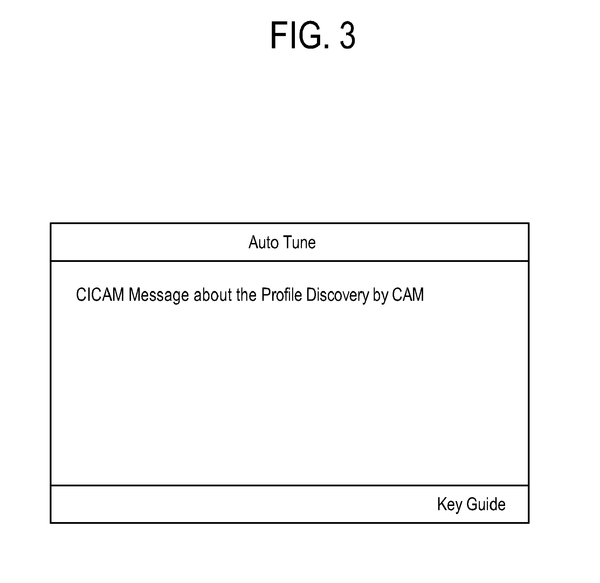

FIG. 3 illustrates an example of the popup window displayed on the image processing apparatus 100. Referring to FIG. 3, the popup window which notifies a user of the connection of the CICAM 200 to the interface 140 is generated by the OSD generator 150 and displayed on the display unit 130, increasing a user's convenience. The controller 170 selects the operator profile corresponding to the inserted CICAM concurrently with the display of the popup window.

The controller 170 obtains identification information from the CICAM 200 inserted into the interface 140, and selects one of the plurality of operator profiles stored in the storage unit 150 based on the obtained identification information. If no operator profile stored in the storage unit 150 corresponds to the obtained identification information of the CICAM 200, the controller 170 recognizes that the inserted CICAM 200 is a new CICAM and requests the operator profile of the new CICAM and stores the operator profile in the storage unit 150. In this case, information of the operator profile is stored together.

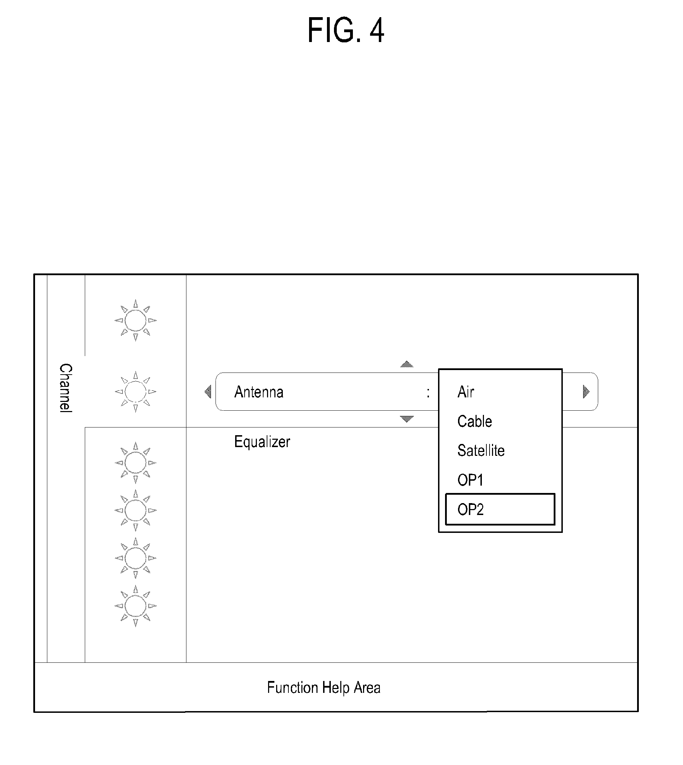

The controller 170 controls the OSD generator 160 to generate and display on the display unit 130 a popup window displaying a type of the selected operator profile. FIG. 4 illustrates another example of displaying the popup window of the image processing apparatus 100. Referring to FIG. 4, if the operator profile corresponding to the CICAM inserted into the interface 140 is automatically selected by the controller 170, a popup window is generated and displayed to notify a user of the type of the selected operator profile In FIG. 4, the storage unit 150 stores therein two types of operator profiles, and a popup window displaying a selection of an operator profile 2 OP 2 corresponding to the inserted CICAM is shown.

If the operator profile corresponding to the inserted CICAM 200 is selected, the controller 170 communicates with the CICAM 200 through the operator profile. A re-scrambled broadcasting signal is transmitted to the interface 140 by the CICAM 200. The received re-scrambled broadcasting signal is descrambled by the signal processor 120. As described above in the paragraph regarding the CICAM 200, if a scrambled broadcasting signal is supplied by the source supply device 200, the image processing apparatus 100 transmits the broadcasting signal to the CICAM 200. The CICAM 200 descrambles only a broadcasting signal that is capable of being descrambled from among the received scrambled broadcasting signals, and re-scrambles the descrambled broadcasting signal to prevent illegal copying and transmits the re-scrambled broadcasting signal to the image processing apparatus 100. Then, the image processing apparatus 100 descrambles and processes the re-scrambled broadcasting signal to display an image on the display unit 130 corresponding to the processed broadcasting signal.

The controller 170 receives additional information of channels capable of being descrambled, i.e., CICAM network information table ( CICAM_NIT) from the CICAM 200. The NIT information includes all network information that is transmitted by an operator providing the CICAM. Accordingly, the NIT information includes information of available broadcasting channels provided by the operator. The CICAM NIT information is used to generate a list of channels capable of being descrambled which may be descrambled by the inserted CICAM 200. The channel list may include a channel map or electronic program guide (EPG) showing channel no., broadcasting hour, program title and synopsis capable of being descrambled.

If no CICAM 200 is connected to the interface 140, the controller 170 receives a TS corresponding to a free broadcasting channel received through the receiver 110 and processes and displays the TS. The TS includes information of the free broadcasting channel, which is extracted to generate a list of free broadcasting channels. The channel list may include a channel map or EPG showing free broadcasting channel no, broadcasting time, program title and synopsis.

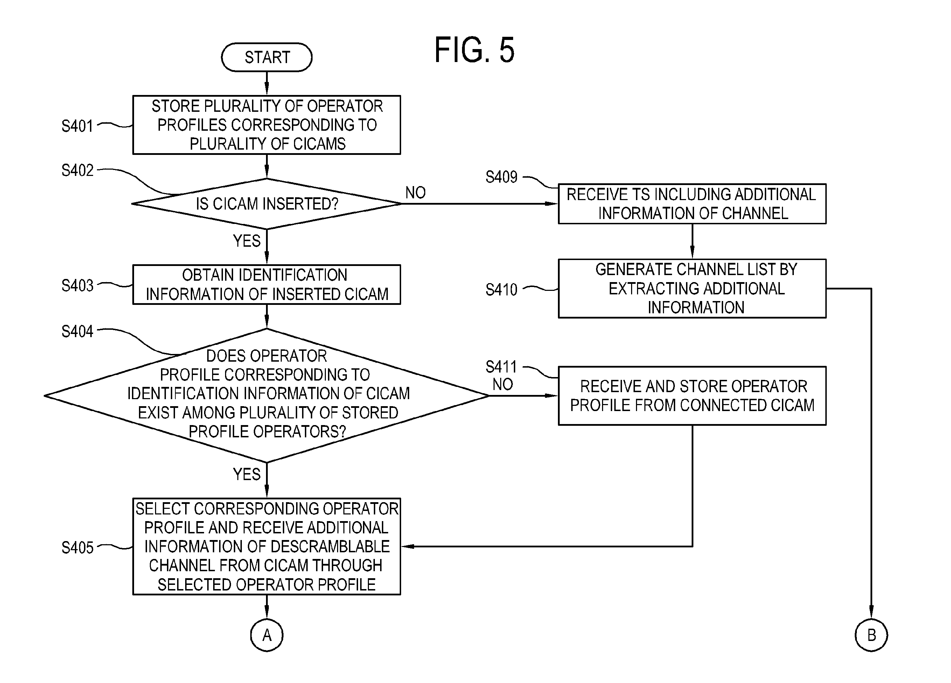

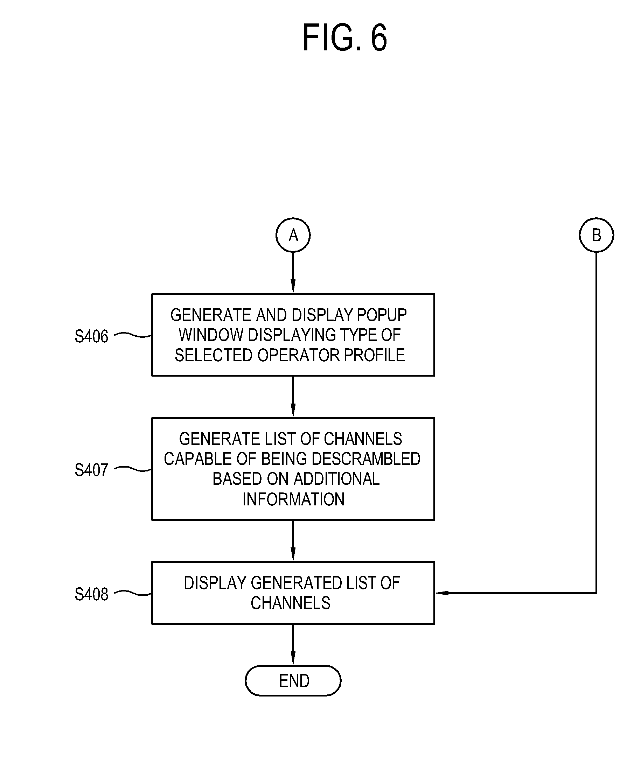

FIGS. 5 and 6 are control flowcharts of the image processing apparatus 100 in FIG. 2. Referring to FIGS. 5 and 6, a control method of the image processing apparatus 100 will be described. If the CICAM 200 is initially inserted into the interface 140, the image processing apparatus 100 receives the operator profile from the CICAM 200 and stores the operator profile in the storage unit 150. The received operator profile and information of the received operator profile are stored together.

As such, the plurality of operator profiles corresponding to the plurality of CICAM 200 and information of each of the operator profiles are stored in the storage unit 150 together (S401). As described above, the information of the operator profiles includes identification information of each operator profile and identification information of the CICAM corresponding to the operator profiles. In addition, the information of the operator profiles may further include version of CICAM_NIT information as additional information of channels capable of being descrambled provided by the CICAM 200, TV mode information and antenna information.

If the CICAM 200 is inserted into the interface 140 (S402), the controller 170 obtains identification information of the CICAM from the CICAM 200 through the interface 140 (S403).

In addition, upon insertion of the CICAM 200 into the interface 140, the controller 170 may control the OSD generator 160 to generate a pop-up window to notify the insertion of the CICAM, and display the pop-up window on the display unit 130. Then, a user may be informed of the insertion of the CICAM 200.

The controller 170 compares the information of the operator profile stored in the storage unit 150 with the obtained identification information of the CICAM, and identifies whether there is any operator profile corresponding to the obtained identification information of the CICAM 200 (S404). If it is identified that there is any operator profile corresponding to the obtained identification information of the CICAM 200, the controller 170 selects the corresponding operator profile and receives additional information of channels capable of being descrambled from the CICAM 200 through the selected operator profile (S405). The additional information of the channels capable of being descrambled includes CICAM_NIT information. The NIT information includes all network information transmitted by the operator providing the CICAM 200. That is, the NIT information includes information of available broadcasting channels provided by the operator.

The controller 170 may control the OSD generator 160 to generate a popup window displaying a type of the selected operator profile, and control the display unit 130 to display thereon the popup window (S406).

The controller 170 may generate a list of channels capable of being descrambled based on the received additional information of the channel capable of being descrambled (S407), and control the display unit 130 to display thereon the generated channel list (S408).

The controller 170 may further control the storage unit 150 to store therein the generated channel list together with the selected operator profile.

At operation S402, if no CICAM 200 is inserted into the interface 140, the controller 170 may control the receiver 110 to receive a TS of a free broadcasting signal (S409). The TS may include additional information of the free broadcasting channel, which may include NIT information of the free broadcasting channel. The controller 170 may extract the additional information from the TS and generate the channel list based on the extracted additional information (S410).

At operation S404, if it is determined that no operator profile stored in the storage unit 150 corresponds to the identification information of the CICAM 200, the controller 170 requests the operator profile through the interface 140 to the CICAM 200, and stores the operator profile that has been received in response to such request, in the storage unit 150 (S411 ).

As described above, an image processing apparatus and a control method thereof automatically selects an operator profile corresponding to a common interface conditional access module (CICAM) connected thereto and generates a list of capable of being descrambled channels that may be descrambled by the CICAM through the operator profile.

Although a few exemplary embodiments have been shown and described, it will be appreciated by those skilled in the art that changes may be made in these exemplary embodiments without departing from the principles and spirit of the present inventive concept, the range of which is defined in the appended claims and their equivalents.

## Claims

1. An image processing apparatus comprising:
an interface which is connectable to a plurality of Common Interface Conditional Access Modules (CICAMs);
a storage unit which stores a plurality of operator profiles corresponding to the plurality of CICAMs; and
a controller which obtains identification information from the CICAM connected to the interface, selects an operator profile corresponding to the obtained identification information among the plurality of operator profiles, generates a channel list of channels capable of being descrambled by receiving additional information on the channels capable of being descrambled from the connected CICAM via the selected operator profile.

2. The image processing apparatus according to claim 1, wherein the storage unit further stores therein operator profile information comprising identification information of the CICAM and identification information of the operator profile.

3. The image processing apparatus according to claim 1, wherein the additional information of the channels capable of being descrambled comprises NIT information that is provided by the CICAM.

4. The image processing apparatus according to claim 1, further comprising a display unit which displays the generated channel list.

5. The image processing apparatus according to claim 1, further comprising an on screen display (OSD) generator, wherein the controller controls the OSD generator to display a type of the operator profile selected.

6. The image processing apparatus according to claim 1, wherein the controller controls the storage unit to receive and store a corresponding operator profile from the CICAM connected to the interface if there is no operator profile corresponding to the identification information among the plurality of stored operator profiles.

7. The image processing apparatus according to claim 1, further comprising:
a receiver which receives a broadcasting signal comprising channel information; and
a signal processor which transmits the broadcasting signal to the display unit.

8. The image processing apparatus according to claim 7, wherein the controller extracts additional information of a channel from a broadcasting signal received by the receiver and generates a channel list from the extracted additional information if no CICAM has been connected to the interface.

9. A control method of an image processing apparatus comprising:
storing a plurality of operator profiles corresponding to a plurality of Common Interface Conditional Access Modules (CICAMs) which descrambles a scrambled broadcasting signal;
connecting a CICAM from among the plurality of CICAMs;
obtaining identification information from the connected CICAM and selecting an operator profile corresponding to the obtained identification information among the plurality of stored operator profiles;
receiving additional information of a channel capable of being descrambled from the connected CICAM by using the selected operator profile; and
generating a list of channels capable of being descrambled based on the received additional information.

10. The control method according to claim 9, further comprising storing information of the operator profile comprising identification information the connected CICAM and identification information of the operator profile.

11. The control method according to claim 9, wherein the additional information of the channel capable of being descrambled comprises NIT information which is provided by the CICAM.

12. The control method according to claim 9, further comprising displaying the generated channel list.

13. The control method according to claim 9, further comprising generating and displaying a popup window which displays a type of the selected operator profile based on the obtained identification information.

14. The control method according to claim 9, further comprising receiving a corresponding operator profile from the CICAM connected to the interface if no operator profile corresponds to the identification information among the plurality of stored operator profiles.

15. The control method according to claim 9, further comprising:
receiving a broadcasting signal comprising channel information; and
processing the broadcasting signal.
